# FASCICULE DE BREVET EUROPEEN

(11) **EP 3 367 802 B1**
(45) Date de publication et mention de la délivrance du brevet: **31.03.2021**
(21) Numéro de dépôt: 16809952.1
(22) Date de dépôt: 28.10.2016
(51) Int. Cl.: A22C 7/00, A22C 17/00

(54) **SYSTÈME POUR FORMER DES STEAKS HACHÉS**
SYSTEM ZUM FORMEN VON HACKSTEACKS
SYSTEM FOR FORMING HAMBURGERS

(30) Priorité: 28.10.2015 FR 1560316
(43) Date de publication de la demande: 05.09.2018
(73) Titulaire: Marel France, 56150 Baud (FR)
(72) Inventeur: LE PAIH, Jacques, 56930 Plumeliau (FR); PIERRE, Yohann, 56700 Kervignac (FR); LE PAIH, Bertrand, 56930 Plumeliau (FR); GRILL, Jean Noël, 56440 Languidic (FR); MEULENDIJKS, Johannes Martinus, 5754 HW Deurne (NL); MESKENDAHL, Dirk, 47559 Kranenburg (DE)
(74) Mandataire: EP&C
(86) Numéro de dépôt international: PCT/FR2016/052825
(87) Numéro de publication internationale: WO 2017/072471

(56) Documents cités:
- WO-A2-2015/012690
- US-A- 2 630 458
- US-A- 3 857 989
- US-A- 4 205 415
- US-A- 5 030 164

## Description

L'invention concerne un système pour former des steaks hachés à partir d'une masse de viande.

Actuellement, il existe plusieurs variantes de steaks hachés qui se différencient par leur présentation et leur consistance, malgré une forme générale de galette ovale ou ronde. En particulier, dans le cas d'un steak dit « façon boucher », les fibres de viande hachée sont disposées de manière aléatoire dans le volume de la galette formant le steak. Dans le cas d'un steak dit « comme à la maison », les fibres de viande hachée sont toutes parallèles les unes aux autres, serrées les unes contre les autres et positionnées perpendiculairement à un plan de la galette.

Afin de réaliser des steaks hachés selon l'une ou l'autre des variantes, des systèmes pour former des steaks hachés sont utilisés. De tels systèmes sont par exemple décrits dans le document WO2004/002229. Comme partiellement illustré à la figure 1, ils comportent une base 1 comprenant une pompe d'alimentation, une trémie 11 recevant une masse de viande à mettre en forme. La pompe étant connectée à une sortie de la trémie, elle alimente, via une conduite d'alimentation, une ou plusieurs entrées d'un moule de formage 12, ici sous la forme d'un moule cylindrique. Les steaks hachés ainsi formés par le moule 12 sont ensuite déposés sur un convoyeur de sortie 13 pour emballage ultérieur. Aujourd'hui, afin de réaliser les différentes variantes de steaks hachés, il est nécessaire d'avoir une chaine de production dédiée à chacune des variantes, c'est-à-dire d'avoir un système pour former des steaks hachés dédié, un système dédié à une variante de steaks hachés ne pouvant par réaliser les autres variantes. Ceci implique, pour un élaborateur, de prévoir autant de lignes de production que de variantes de steaks hachés. Ceci a pour inconvénient de multiplier les systèmes pour former les steaks hachés et d'augmenter les surfaces d'occupation sur le lieu de production.

WO2015/012690 décrit un système pour former des steaks hachés, comprenant un élément d'alimentation en masse qui est pourvu d'un corps d'embouchure à orifice ayant de multiples orifices de sortie formant l'embouchure de sorte que la masse s'écoule dans une cavité de moule via lesdits multiples orifices de sortie, et en ce que l'élément d'alimentation en masse est pourvu de multiples éléments de broyage mobiles auxdites positions d'axe perpendiculaire distinctes lorsqu'il est vu perpendiculairement au trajet de l'élément de moule.

US4205415 décrit un système pour former des steaks hachés, comprenant des couteaux pour découper la viande avant de poursuivre l'extrusion. Une plaque de broyage conventionnelle plane est fixée de façon étanche à l'adaptateur et comporte une pluralité d'ouvertures.

US5030164 décrit un système pour former des steaks hachés, comprenant une plaque de base ayant une ouverture cylindrique dans laquelle est reçue une plaque de remplissage en forme de disque ou cylindrique qui peut tourner autour de son axe central par rapport à la plaque de base. La plaque de base comprend en outre une lame de coupe ou un couteau dont les arêtes de coupe sont orientées dans des directions opposées.

Un but de l'invention est de fournir un système pour former les steaks hachés qui permette de réaliser toutes les variantes de steaks hachés sans être dédié à une seule variante.

A cette fin, il est prévu selon un premier aspect de la divulgation, un système pour former des steaks hachés à partir d'une masse de viande comportant un moule comprenant au moins une cavité de formation de steak haché, une conduite d'amenée de la masse viande vers le moule, ainsi qu'un élément d'interfaçage de la conduite d'amenée sur le moule comprenant
- un tronçon de tubulure ayant une première extrémité connectée à une sortie de la conduite d'amenée et une deuxième extrémité opposée connectée à une entrée du moule ;
- une plaque de broyage ; et,
- des moyens de retenue de la plaque de broyage dans une section du tronçon de tubulure, les moyens de retenue étant répartis le long du tronçon de tubulure de manière discrète.

Ainsi, la présence de moyens de retenue répartie le long du tronçon de tubulure de manière discrète permet de positionner à des distances choisies du moule la plaque de broyage, permettant ainsi de répartir différemment les fibres de viande hachée dans le volume de la galette formant le steak haché final. Ainsi, il suffit seulement de déplacer la plaque de broyage au sein d'un même système pour former des steaks hachés selon différentes variante.

Avantageusement, mais facultativement, le système pour former des steaks hachés selon le premier aspect de la divulgation présente au moins l'une des caractéristiques techniques additionnelles suivantes :
- les moyens de retenues comprennent un rebord s'étendant de manière centripète depuis une paroi interne du tronçon de tubulure ;
- le rebord s'étend sur une circonférence d'une section de la paroi interne ;
- une surface du rebord recevant en appui la plaque de broyage est face à un écoulement de la masse de viande ;
- un premier moyen de retenue est situé au niveau de la deuxième extrémité du tronçon de tubulure ;
- un deuxième moyen de retenue est situé au niveau de la première extrémité du tronçon de tubulure ;
- le tronçon de tubulure présente une section variant le long dudit tronçon de tubulure ;
- la section du tronçon de tubulure diminue depuis la première extrémité vers la deuxième extrémité ;
- l'élément d'interfaçage comporte un coude monté amovible sur la première extrémité du tronçon de tubulure ;
- l'élément d'interfaçage comporte une lame de broyage associée à la plaque de broyage et montée en amont de cette dernière ;
- l'élément d'interfaçage comporte des moyens d'entraînement en rotation de la lame de broyage débrayables ;
- les moyens d'entraînement sont montés sur le coude, un arbre d'entraînement s'étendant dans le coude de manière coaxiale au tronçon de tubulure ;
- la lame de broyage est montée mobile en appui sur la plaque de broyage, et montée mobile à coulissement sur les moyens d'entraînement ;
- la cavité du moule est mobile par rapport à l'entrée du moule ;
- le moule peut fonctionner en rotation continue ;
- le moule peut également fonctionner par une alternance de déplacement et d'arrêts, le remplissage étant réalisé au moins lors des arrêts ;
- Le système comporte en outre des moyens de pilotage d'une injection de masse de viande dans la cavité du moule agencés de sorte à réaliser l'injection lors d'une très forte décélération de la cavité du moule ;
- Le système comporte en outre des moyens de coupe des fibres (F) injectées dans la cavité (140, 245) agencés de sorte à araser le steak haché en cours d'élaboration lors d'un déplacement de la cavité ;
- au niveau de la deuxième extrémité du tronçon de tubulure, l'élément d'interfaçage comporte une filière de création d'une série de flux d'injection, notamment dans un moule avec une série de multiples cavités ;
- la filière comporte une série de noyaux fixée sur la plaque de broyage ;
- une série de un ou plusieurs noyaux sont arrangés dans le tronçon de tubulure ; par exemple, ce ou ces noyaux s'étendent depuis la plaque de broyage jusqu'à une deuxième extrémité, et le moule a une excroissance qui est alignée avec ce dit ou ces dits noyaux dans la position de remplissage de manière à créer un produit avec un trou.

Le premier aspect de la divulgation concerne aussi un procédé de mise en œuvre du système présentant au moins l'une des caractéristiques techniques précédentes.

Il est aussi divulgué, mais non revendiqué, un procédé pour former des steaks hachés à partir d'une masse de viande dans lequel il met en œuvre un système pour former des steaks hachés à partir d'une masse de viande comportant :
- un moule comprenant au moins une cavité de formation de steak haché ;
- une conduite d'amenée de la masse viande vers le moule,
   le système comportant en outre un élément d'interfaçage de la conduite d'amenée sur le moule comprenant :
   - un tronçon de tubulure ayant une première extrémité connectée à une sortie de la conduite d'amenée et une deuxième extrémité opposée connectée à une entrée du moule ;
   - une plaque de broyage montée à la première extrémité;
   - une lame de broyage associée à la plaque de broyage et monté en amont de cette dernière,
   et dans ce système :
   - le tronçon de tubulure a - en aval de la plaque de broyage - une première partie de forme tronconique recevant des fibres de viande hachée à la sortie de la plaque de broyage agencée de sorte à permettre un resserrement de ces fibres de viande hachée pour que les fibres de viande haché soient sensiblement parallèles les unes par rapport aux autres et serrées les unes contre les autres de sorte à former un ensemble cohérent de fibres parallèles,
   - le tronçon de tubulure a - en aval de la première partie et adjacent à cette première partie - une deuxième partie sensiblement de forme cylindrique de révolution, se terminant au niveau de la deuxième extrémité,
   - le tronçon de tubulure est un conduit ouvert de sorte que l'ensemble cohérent de fibres parallèles s'écoule librement et sans perturbation le long de la deuxième partie du tronçon de tubulure et sorte de la deuxième extrémité dans le moule.

L'invention concerne un système selon la revendication 1 pour former des steaks hachés à partir d'une masse de viande comportant :
- un moule comprenant au moins une cavité de formation de steak haché ;
- une conduite d'amenée de la masse viande vers le moule,
le système comportant en outre un élément d'interfaçage de la conduite d'amenée sur le moule comprenant :
- un tronçon de tubulure ayant une première extrémité connectée à une sortie de la conduite d'amenée et une deuxième extrémité opposée connectée à une entrée du moule ;
- une plaque de broyage montée au niveau de la première extrémité;
- une lame de broyage associée à la plaque de broyage et montée en amont de cette dernière,
et dans ce système :
- le tronçon de tubulure a - en aval de la plaque de broyage - une première partie de forme tronconique recevant des fibres de viande hachée à la sortie de la plaque de broyage agencée de sorte à permettre un resserrement de ces fibres de viande hachée pour que les fibres de viande haché soient sensiblement parallèles les unes par rapport aux autres et serrées les unes contre les autres de sorte à former un ensemble cohérent de fibres parallèles,
- le tronçon de tubulure a - en aval de la première partie et adjacent à cette première partie - une deuxième partie sensiblement de forme cylindrique de révolution, se terminant au niveau de la deuxième extrémité,
- dans lequel le tronçon de tubulure est un conduit ouvert de sorte que l'ensemble cohérent de fibres parallèles s'écoule librement et sans perturbation le long de la deuxième partie du tronçon de tubulure et sorte de la deuxième extrémité dans le moule.

Selon un troisième aspect, la divulgation concerne un système pour former des steaks hachés à partir d'une masse de viande comportant :
- un moule comprenant au moins une cavité de formation de steak haché ;
- une conduite d'amenée de la masse viande vers le moule,
le système comportant en outre un élément d'interfaçage de la conduite d'amenée sur le moule comprenant :
- un tronçon de tubulure ayant une première extrémité connectée à une sortie de la conduite d'amenée et une deuxième extrémité opposée connectée à une entrée du moule ;
- une plaque de broyage montée au niveau de la première extrémité;
- de préférence, une lame de broyage associée à la plaque de broyage et montée en amont de cette dernière,
- une série d'un ou plusieurs noyaux aménagée dans le tronçon de tubulure lesquels un ou plusieurs noyaux s'étendent depuis la plaque de broyage jusqu'à la deuxième extrémité, dans lequel le moule comporte une excroissance qui est dans l'alignement des noyaux, lorsque le moule est en position de remplissage de sorte à créer un steak haché comportant un orifice, notamment traversant.

Le troisième aspect de la divulgation concerne aussi un procédé de réalisation d'un steak haché comportant un ou plusieurs orifices traversants, le procédé mettant en œuvre le système précédent.

D'autres caractéristiques et avantages de l'invention apparaîtront lors de la description ci-après d' un mode de réalisation ainsi que d'une variante. Aux dessins annexés :
- La figure 1 est une vue tridimensionnelle générale d'un système pour former des steaks hachés selon l'invention ;
- La figure 2 est une vue partielle en coupe d'un système non revendiqué pour former des steaks hachés illustrant un élément d'interfaçage de la conduite d'amenée sur le moule, la plaque de broyage étant dans une première position ;
- La figure 3 est un détail de la figure 2 au niveau de la plaque de broyage dans une première position ;
- La figure 4 est une vue partielle en coupe du système selon l'invention pour former des steaks hachés de la figure 1 illustrant un élément d'interfaçage de la conduite d'amenée sur le moule, la plaque de broyage étant dans une deuxième position ;
- La figure 5 est un détail de la figure 4 au niveau de la plaque de broyage dans une deuxième position ;
- La figure 6 est une vue partielle en coupe et schématique d'une variante de réalisation du système pour former des steaks hachés selon l'invention ;
- La figure 7 est une vue en coupe de détail d'une autre variante de réalisation de l'élément d'interfaçage de la conduite d'amenée sur le moule pour un système pour former les steaks hachés selon la divulgation ;
- Les figures 8a et 8b sont des vues tridimensionnelles illustrant deux modes de réalisation d'une extrémité en regard du moule de l'élément d'interfaçage de la figure 7 ;
- La figure 9 est une vue en coupe de détail d'une variante supplémentaire de réalisation de l'élément d'interfaçage de la conduite d'amenée sur le moule pour un système pour former les steaks hachés selon la divulgation ; et,
- La figure 10 est une vue tridimensionnelle partielle en coupe d'une autre variante de réalisation de l'élément d'interfaçage de la conduite d'amenée sur le moule pour un système pour former les steaks hachés selon la divulgation.

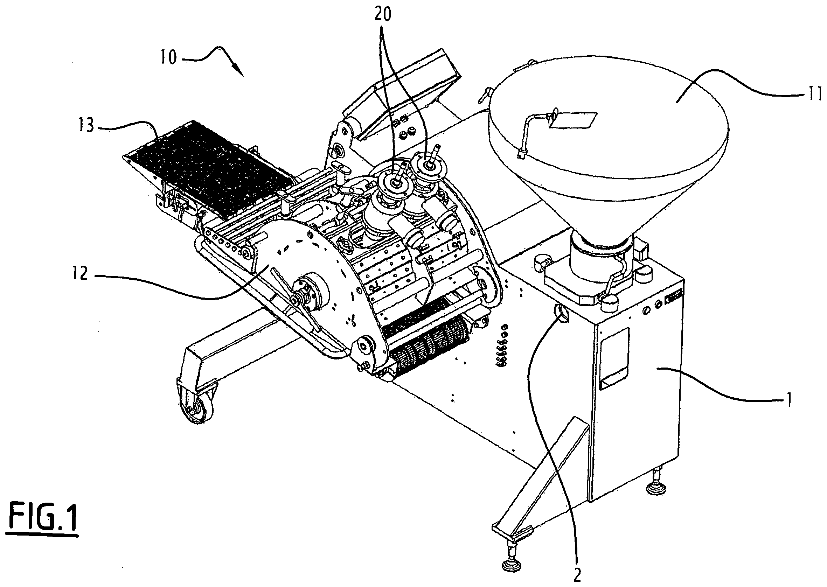

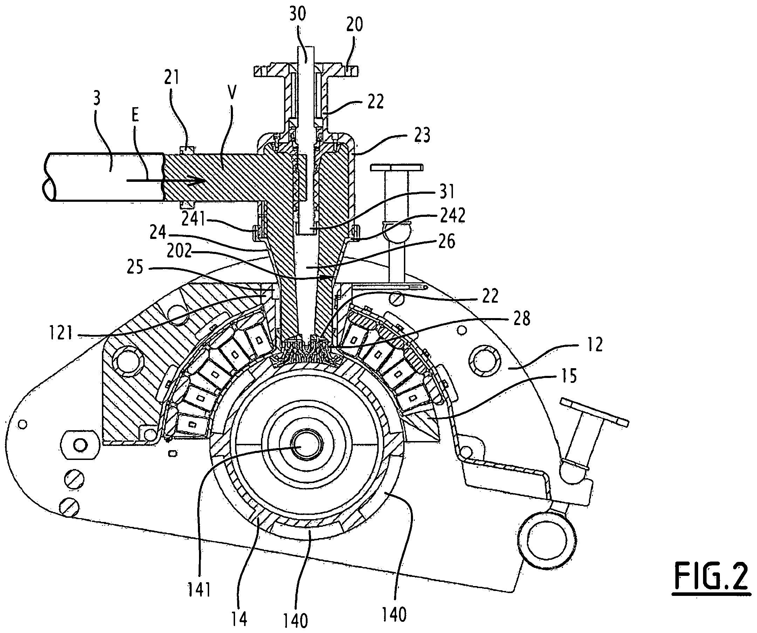

En référence à la figure 1, nous allons décrire un système pour former des steaks hachés 10 selon l'invention. Le système pour former des steaks hachés 10 selon l'invention comporte une base 1 comprenant de manière connue en soi des moyens de pilotages et de mise en œuvre du système pour former des steaks hachés 10 selon l'invention. Entre autres, la base 1 comporte une pompe d'alimentation dont une entrée est reliée à une sortie d'une trémie 11 dans laquelle est stocké de la viande destinée à la réalisation de steaks hachés. La viande contenue dans la trémie 11 peut être hachée ou non. Une sortie de la pompe d'alimentation est connectée à une ou plusieurs entrées 121 d'un moule 12 par une conduite d'amenée 3 (visibles sur la figure 2 par exemple) de la masse de viande. La conduite d'amenée 3 est reliée à chacune des entrées 121 du moule 12 via un élément d'interfaçage 21 qui va être décrit plus en détail dans la suite de cette description. Le moule 12 est un moule de type à tambour rotatif connu en soi. En sortie du moule 12, le système pour former des steaks hachés 10 selon l'invention comporte un convoyeur 13 d'évacuation des steaks hachés élaborés dans le moule 12 vers une station d'emballage par exemple.

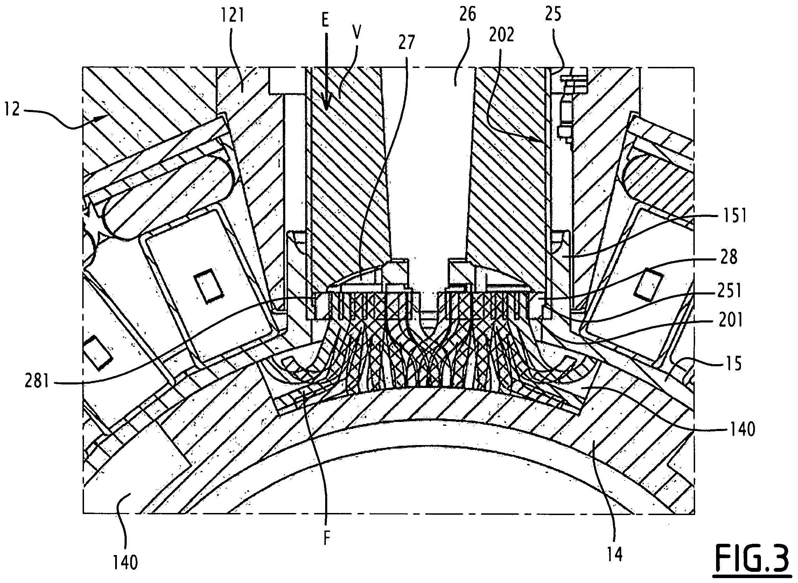

En référence aux figures 2 et 3, nous allons décrire en détail le système pour former des steaks hachés 10 selon la divulgation dans une première configuration. Plus précisément, nous allons décrire l'élément d'interfaçage 20 du système pour former des steaks hachés 10 selon la divulgation.

L'élément d'interfaçage 20 comporte un tronçon de tubulure 24,25 comportant une première extrémité 241 connectée à une sortie du conduit d'amenée 3 via, ici, un coude 23. Le tronçon de tubulure 24,25 comporte une deuxième extrémité 201 opposée à la première extrémité 241 et connectée à une entrée 121,151 du moule 12. Le coude 23 est interposé entre le tronçon de tubulure 24,25 et le conduit d'amenée 3. Le coude 23 est connecté au conduit d'amenée 3 au niveau d'une entrée 21. Le coude 23 est connecté à la première extrémité 241 du tronçon de tubulure 24,25 au niveau d'une sortie située dans un axe du tronçon de tubulure 24,25. Le système pour former des steaks hachés 10 selon la divulgation comporte en outre des moyens d'entraînement 22,30. Les moyens d'entraînement 22,30 comprenant un arbre d'entraînement 30 s'étendant dans le coude 23 de manière coaxiale à l'axe du tronçon de tubulure 24,25. L'arbre d'entraînement 30 comprend une extrémité libre d'entraînement 31 situé au niveau de la sortie du coude 23 sans s'étendre au-delà de cette sortie, ici.

Le tronçon de tubulure 24,25 comporte, ici, une partie supérieure 24, ici, de forme tronconique s'étendant depuis la première extrémité 241 et une partie inférieure 25 sensiblement de forme cylindrique de révolution prolongeant vers la deuxième extrémité 201 la partie supérieure 24 tronconique. La partie supérieure 24 de forme tronconique présente donc, ici, une section variant le long de la partie supérieure 24 en diminuant depuis la première extrémité 241 vers la deuxième extrémité 201 du tronçon de tubulure 24,25. En variante de réalisation, les parties supérieure 24 et inférieure 25 sont identiques et de forme cylindrique de révolution de même section.

Le tronçon de tubulure 24,25 comporte une paroi interne 202. Au niveau de la première extrémité 241, le tronçon de tubulure 24,25 comporte un premier rebord 242 s'étendant, ici, de manière centripète depuis la paroi interne 202. Le premier rebord 242 s'étend, en outre, sur une circonférence d'une section de la paroi interne 202 au niveau de la première extrémité 241, de manière continue. En variante, le premier rebord 242 s'étend de manière discontinue et forme une série de secteurs de rebord discrets uniformément répartis (ou non) sur ladite circonférence. De manière similaire, au niveau de la deuxième extrémité 201, le tronçon de tubulure 24,25 comporte un deuxième rebord 251 s'étendant, ici, de manière centripète depuis la paroi interne 202. Le deuxième rebord 251 s'étend, en outre, sur une circonférence d'une section de la paroi interne 202 au niveau de la deuxième extrémité 201, de manière continue. En variante, le deuxième rebord 251 s'étend de manière discontinue et forme une série de secteurs de rebord discrets uniformément répartis (ou non) sur ladite circonférence.

L'élément d'interfaçage 20 comporte en outre une plaque de broyage 28 qui est positionnée dans le tronçon de tubulure 24,25 de manière perpendiculaire à l'axe du tronçon de tubulure 24,25. De manière connue en soi, la plaque de broyage 28 comporte une série d'orifices traversants une épaisseur répartis sur la surface de la plaque de broyage 28. Ainsi, une fois en position dans le tronçon de tubulure 24,25, la série d'orifices traversant ont leur axe parallèle à l'axe du tronçon de tubulure 24,25. D'autre part la plaque de broyage 28 comporte un rebord 281 sur une circonférence d'une paroi latérale de la plaque de broyage 281. Le rebord 281 s'étende de manière centrifuge de puis cette paroi latérale.

Dans la première configuration du système pour former des steaks hachés 10 selon la divulgation illustrée aux figures 2 et 3, la plaque de broyage 28 est dans une première position au niveau de la deuxième extrémité 201 du tronçon de tubulure 24,25, le rebord 281 de la plaque de broyage 28 étant alors en appui sur le deuxième rebord 251 du tronçon de tubulure 24,25. Le maintien de cet appui est assurée par les efforts exercés par un écoulement E de la masse de viande V passant à travers la plaque de broyage 28. En effet, pour cela, une surface du deuxième rebord 251 recevant en appui la plaque de broyage 28 fait face à l'écoulement E de la masse de viande V.

D'autre part, l'élément d'interfaçage 20 comporte une lame de broyage 27 associée à la plaque de broyage 28. La lame de broyage 27 est montée sur une extrémité d'un prolongateur d'arbre 26 de sorte à ce que ce dernier puisse entrainer la lame de broyage 27 lors d'un mouvement de rotation. Pour faciliter les montages et démontages, la lame de broyage 27 est montée mobile à coulissement sur l'extrémité du prolongateur d'arbre 26. Le prolongateur d'arbre 26 est par ailleurs montée libre à coulissement sur l'extrémité 31 de l'arbre d'entraînement 30, ce dernier entrainant le prolongateur d'arbre 26 lors d'un mouvement de rotation. La lame de broyage 27 est en appui sur la plaque de broyage 28, en amont de celle-ci dans le sens de l'écoulement E de la masse de viande V.

Le moule 12 du système pour former des steaks hachés 10 selon l'invention est ici un moule de type tambour. Il comporte un tambour 14 entrainé en rotation autour d'un axe 141. Sur une surface extérieure, le tambour 14 comporte une série de cavités ou d'alvéoles 140. Ces cavités 140 sont donc mobiles et servent à former les steaks hachés en forme de galette à partir de la masse de viande V en sortie de l'élément d'interfaçage 20. Sur une partie supérieure, le moule 12 comporte un carter 15 de forme complémentaire de la surface extérieure du tambour 14. Le carter 15 comporte un manchon 151 destiné à recevoir au moins à coulissement la deuxième extrémité 201 du tronçon de tubulure 24,25 de l'élément d'interfaçage 20. Le manchon 151 s'étend dans l'entrée 121 du moule 12.

Dans cette configuration du système pour former des steaks hachés 10 selon la divulgation, la plaque de broyage 28 est située juste à l'entrée de la cavité 140. Ainsi lors d'une injection d'une masse de viande V dans la cavité 140, les fibres de viande hachée F se disposent de manière aléatoire dans le volume de la cavité 140 comme illustré à la figure 3. Cela permet l'élaboration d'un steak dit « du boucher ». Le tambour 14 étant en rotation, le système pour former des steaks hachés 10 selon l'invention comporte des moyens de pilotage d'une injection de masse de viande V dans la cavité 140. Ces moyens de pilotage sont agencés de sorte à réaliser l'injection lors d'une très forte décélération du tambour 14, et donc de la cavité 140, lorsque cette dernière arrive au droit de l'entrée 121 du moule 12.

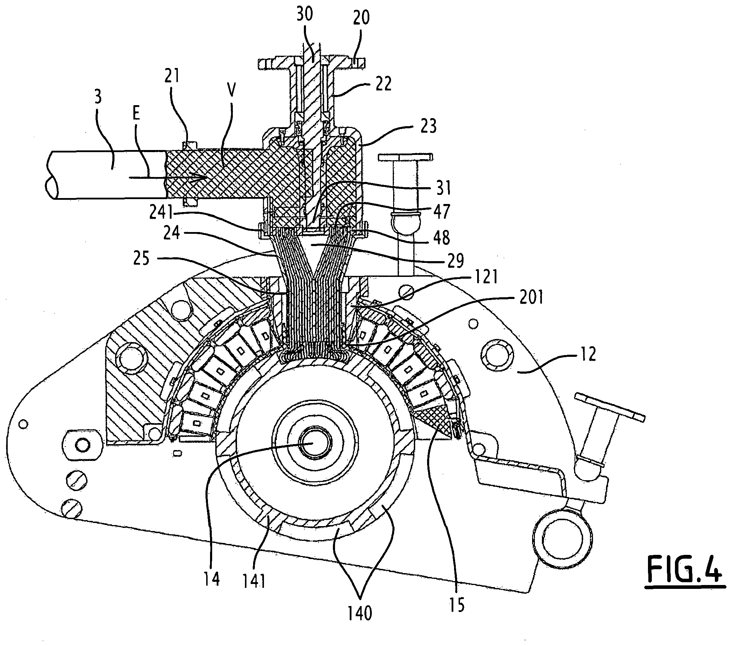

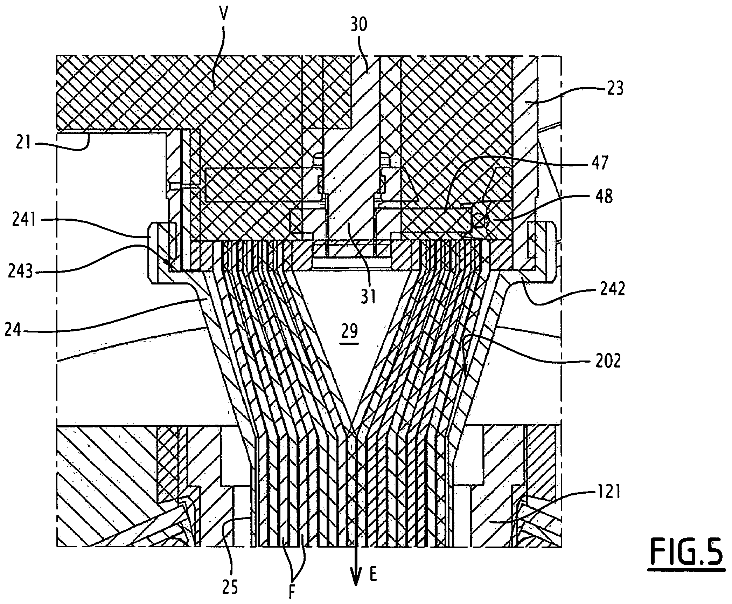

En référence maintenant aux figure 4 et 5, nous allons décrire une deuxième configuration du système pour former des steaks hachés 10 selon l'invention. Dans cette configuration, la plaque de broyage 28 est retirée et est remplacée par une plaque de broyage 48 qui présente une structure similaire. La plaque de broyage 48 comporte une série d'orifices traversants une épaisseur répartis sur la surface de la plaque de broyage 48. Ainsi, une fois en position dans le tronçon de tubulure 24,25, la série d'orifices traversant ont leur axe parallèle à l'axe du tronçon de tubulure 24,25. La plaque de broyage 48 est dans une deuxième position au niveau de la première extrémité 241 du tronçon de tubulure 24,25. La plaque de broyage 48 est en appui sur une surface 243 du premier rebord 242. De nouveau, le maintien de cet appui est assuré par les efforts exercés par un écoulement E de la masse de viande V passant à travers la plaque de broyage 48. En effet, pour cela, la surface 243 du premier rebord 242 recevant en appui la plaque de broyage 48 fait face à l'écoulement E de la masse de viande V.

D'autre part, l'élément d'interfaçage 20 comporte une lame de broyage 47 associée à la plaque de broyage 48. La lame de broyage 47 est montée directement à coulissement sur l'extrémité 31 de l'arbre d'entraînement 30. Ce dernier entraine lors d'un mouvement de rotation la lame de broyage 47. De nouveau, la lame de broyage est en appui sur la plaque de broyage 47, en amont de celle-ci dans le sens de l'écoulement E de la masse de viande V.

D'autre part, dans cette deuxième configuration du système pour former des steaks hachés 10 selon l'invention :
- le tronçon de tubulure a - en aval de la plaque de broyage 48 - une première partie de forme tronconique 24 recevant des fibres F de viande hachée à la sortie de la plaque de broyage 48 agencée de sorte à permettre un resserrement de ces fibres de viande hachée pour que les fibres de viande haché soient sensiblement parallèles les unes par rapport aux autres et serrées les unes contre les autres de sorte à former un ensemble cohérent de fibres parallèles,
- le tronçon de tubulure a -en aval de la première partie de forme tronconique 24 et adjacent à cette première partie de forme tronconique 24 - une deuxième partie 25 sensiblement de forme cylindrique de révolution, se terminant au niveau de la deuxième extrémité 201,
- le tronçon de tubulure est un conduit ouvert de sorte que l'ensemble cohérent de fibres F parallèles s'écoule librement et sans perturbation le long de la deuxième partie 25 du tronçon de tubulure et sorte de la deuxième extrémité 201 dans le moule 247.

Dans ce mode de réalisation, un cône de guidage 29 est monté coaxialement et s'étendant dans la partie supérieure 24 du tronçon de tubulure 24,25. Dans cette configuration, le rôle de la première partie 24 de forme tronconique du tronçon de tubulure 24,25, assistée du cône de guidage 29, est de guider et de resserrer les fibres F de viande haché à la sortie de la plaque de broyage 48 pour que les fibres F de viande haché soient sensiblement parallèles les unes par rapport aux autres et serrées les unes contre les autres de sorte à former un ensemble cohérent de fibres parallèles de viande hachée.

La deuxième partie 25 cylindrique sert à guider l'ensemble cohérent de fibres en avant, permettant éventuellement un arrangement supplémentaire des fibres de viande hachée dans l'ensemble.

Il est à noter que le tronçon de tubulure 24, 25 est un conduit ouvert de sorte que l'ensemble cohérent de fibres parallèles s'écoule librement et sans perturbation le long de la deuxième partie du tronçon de tubulure et sorte de la deuxième extrémité 201 dans le moule 247. , Ceci au contraire du système décrit à la figure 14 du document WO2015/012690, dans lequel une plaque trouée supplémentaire est positionnée au niveau de la deuxième extrémité.

L'ensemble cohérent de fibres de viande hachée est introduit dans la cavité 140 du moule 12. Le steak haché ainsi réalisé comporte alors des fibres de viande dans le sens de l'épaisseur de la galette formant le steak haché afin de former un steak haché dit « comme à la maison ».

Dans un mode de réalisation, au niveau de la deuxième extrémité, le système comporte en outre des moyens de coupe de l'ensemble de fibres F une fois la cavité 140, 245 remplie. Par exemple, un câble ou une lame de coupe est déplacée à travers l'ensemble de fibres après remplissage et avant que le moule ne soit déplacé de sa position de remplissage vers une position de démoulage du steak haché ainsi formé. Le reste du fonctionnement du système pour former des steaks hachés 10 selon la divulgation dans cette deuxième configuration est identique que dans la première configuration précédemment décrit.

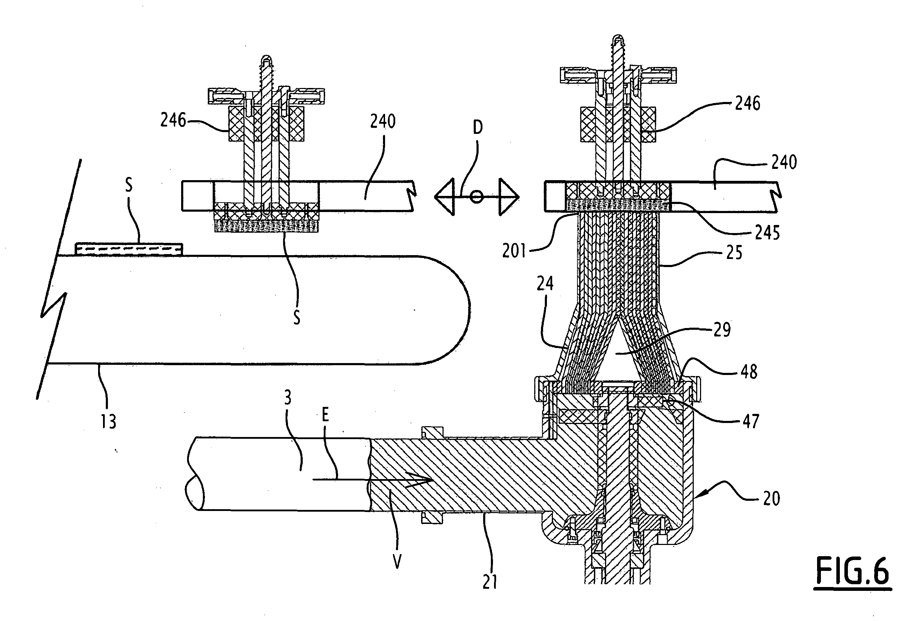

Maintenant, en référence à la figure 6, est illustré une variante du système pour former des steaks hachés 10 selon l'invention. Cette variante de réalisation du système pour former des steaks hachés 10 selon l'invention se différencie du mode précédemment décrit par le fait que le moule de type tambour est remplacé par un moule à tiroir 240, connu en soi lui aussi. Le moulage de la forme du steak haché S à élaborer est réalisé dans des cavités 245 qui sont remplies, ici, par le dessous. Un système de démoulage 246 permet ensuite de démouler et de faire tomber le steak haché S élaboré sur le convoyeur 13, suite à un mouvement D du tiroir 240 du moule. L'élément d'interfaçage 20 précédemment décrit est alors situé dans le prolongement du convoyeur 13, comme illustré à la figure 6. Il est à noter que l'élément d'interfaçage 20 est illustré dans la deuxième configuration précédemment décrite du système pour former des steaks hachés 10 selon l'invention, en relation avec les figures 4 et 5. Toutefois, l'élément d'interfaçage 20 selon la première configuration précédemment décrite du système pour former des steaks hachés 10 selon l'invention en relation avec les figures 2 et 3 peut être utilisé de la même manière avec un moule à tiroir 240.

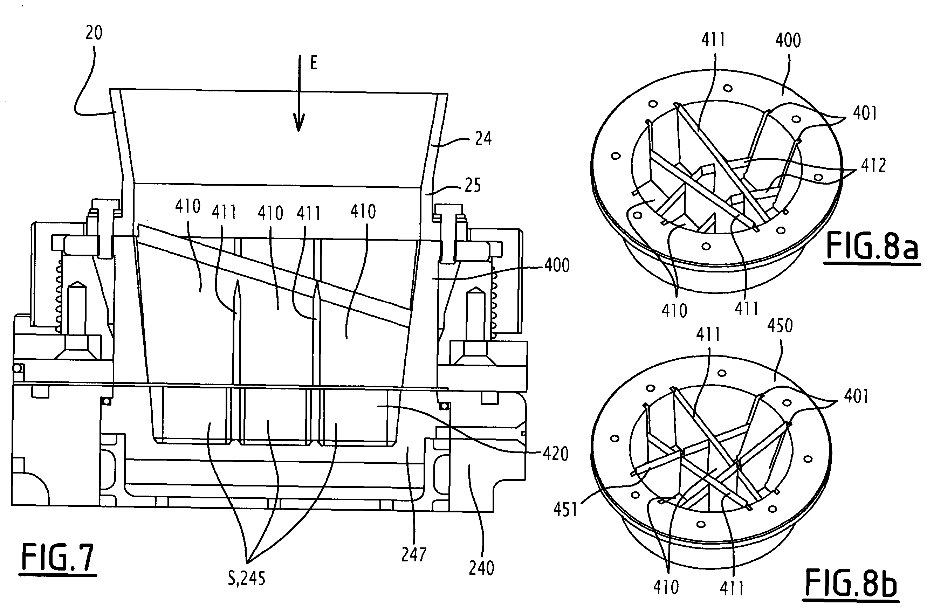

En référence aux figures 7, 8a et 8b, nous allons décrire une deuxième variante de réalisation d'un système pour former des steaks hachés selon l'invention. Cette variante de réalisation se base sur le système pour former des steaks hachés décrit en référence à la figure 6. Toutefois, elle peut être adaptée pour fonctionner avec un moule de type à tambour rotatif comme illustré à figure 4.

Les steaks S qui sont formés ici se présentent sous la forme de blocs parallélépipédiques. Un moule 247 monté dans un tiroir 240 ou autre membre de moule mobile comporte une série de cavités 245 de réception de la viande haché. Ici la série de cavités comporte neuf cavités 246 réparties pour former un carré de trois par trois cavités. En regard du moule 247 en position de remplissage, l'élément d'interfaçage 20 est similaire à la deuxième configuration précédemment décrite du système pour former des steaks hachés 10 selon l'invention en relation avec les figures 4 et 5. La partie inférieure 25 du tronçon de tubulure 24,25, comprend une filière 400, 450 qui permet de séparer le flux de viande hachée E que forme l'ensemble de fibres de viande hachée issu de la première partie tronconique 24en plusieurs flux d'injection 410, ici au nombre de neuf, dont les dimensions en section correspondent à celles des cavités 245 du moule 247. De ce fait, au moment de la formation des steaks S, un flux d'injection 410 se retrouve en regard d'une cavité 245 du moule 247. La taille en section des flux d'injection 410 est réalisée au sein de la filière 400, 450 par des parois 411,412 et 451. Ici, ces parois présentent un bord supérieur en biseau de sorte à former un couteau permettant une séparation aisée du flux ou ensemble E de viande hachée. Les parois 411, 412 et 451 sont insérées dans des gorges 401 s'étendant selon une génératrice d'une paroi interne de la filière 400, 450. De plus, le biseau supérieur des parois 411, 412, 451 s'étend selon un angle d'inclinaison, par rapport à un plan de section de la filière 400, 450.

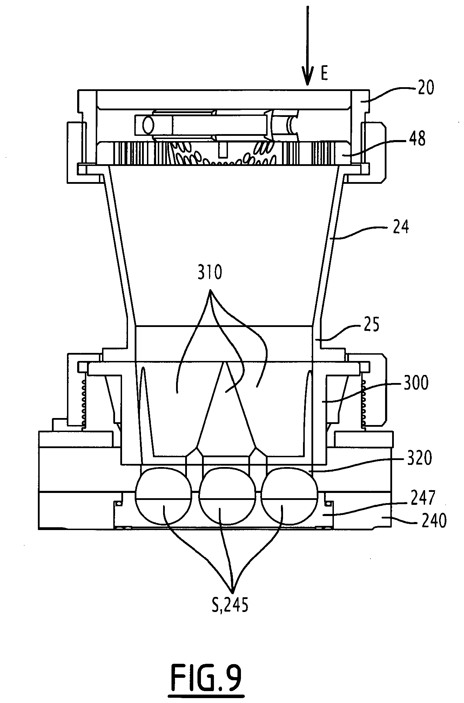

En référence à la figure 9, nous allons décrire une troisième variante de réalisation d'un système pour former des steaks hachés selon la divulgation. Cette variante de réalisation se base, comme la précédente, sur le système pour former des steaks hachés décrit en référence à la figure 6. Toutefois, elle peut être adaptée pour fonctionner avec un moule de type à tambour rotatif comme illustré à figure 4.

Les steaks S qui sont formés ici se présentent sous la forme générale d'une boule. Un moule 247 monté dans un tiroir 240 comporte une série de cavités 245, ici sensiblement sphérique, de réception de la viande hachée. Ici, la série de cavités comporte six cavités 245 réparties pour former deux rangés parallèles de trois cavités chacune. En regard du moule 247 en position de remplissage, l'élément d'interfaçage 20 est, de nouveau, similaire à la première configuration précédemment décrite du système pour former des steaks hachés 10 selon la divulgation en relation avec les figures 2 et 3. La partie inférieure 25 du tronçon de tubulure 24,25, se termine par une filière 300 qui permet de séparer le flux de viande hachée E en plusieurs flux d'injection 310, ici au nombre de six, dont les dimensions en section d'une extrémité 320 correspondent à celles des cavités 245 du moule 247. De ce fait, au moment de la formation des steaks S, un flux d'injection 310 se retrouve en regard d'une cavité 245 du moule 247. Le dimensionnement en section des flux d'injection 310 est réalisé au sein de la filière 300 par des tubulures tronconiques.

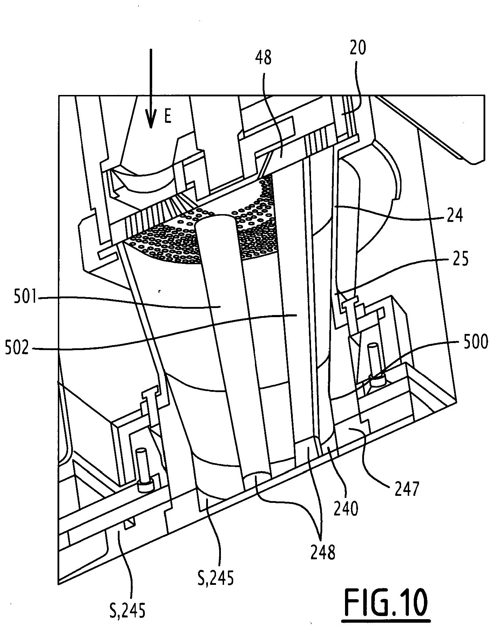

En référence à la figure 10, nous allons décrire une quatrième variante de réalisation d'un système pour former des steaks hachés selon la divulgation. Cette variante de réalisation se base, comme les précédentes, sur le système pour former des steaks hachés décrit en référence à la figure 6. Toutefois, elle peut être adaptée pour fonctionner avec un moule de type à tambour rotatif comme illustré à figure 4.

Dans cette quatrième variante de réalisation, les steaks S formés se présentent sous la forme d'une galette présentant des évidements traversant une épaisseur de la galette. Par exemple, la galette est ronde et comporte trois évidements en forme d'yeux et de bouche pour représenter un émoticon. Un moule 247 monté dans un tiroir 240 comporte une cavité 245 de réception de la viande haché ainsi que des excroissances 248 s'étendant en saillie depuis un fond de la cavité 245 et correspondants aux évidements à réaliser dans la galette. En regard du moule 247 en position de remplissage, l'élément d'interfaçage 20 est, de nouveau, similaire à la première configuration précédemment décrite du système pour former des steaks hachés 10 selon la divulgation en relation avec les figures 2 et 3. La partie inférieure 25 du tronçon de tubulure 24,25, se termine par une filière 500 qui permet de former le flux de viande hachée E en un flux d'injection dont la section, en sortie de l'élément d'interfaçage 20, est similaire à une section du steak S à former dans le moule 247. Pour cela, la filière 500 comporte une série de noyaux 501 et 502 qui s'étendent parallèlement au flux de viande hachée E et sensiblement perpendiculairement à une section de la filière 500. Les noyaux 501 et 502 présentent une extrémité inférieure qui est positionnée en regard de l'excroissance 248 associée, une fois le moule 247 en position de remplissage. Dans le mode de réalisation illustré en figure 10, les noyaux 501 et 502 s'étendent longitudinalement à travers le tronçon de tubulure 24,25 de sorte qu'une extrémité opposée des noyaux vienne en contact de la plaque de broyage 48. Des moyens de fixation de cette extrémité opposée sont prévus pour fixer les noyaux 501 et 502 sur la plaque de broyage 48.

En variante de réalisation, les noyaux 501 et 502 sont plus courts, leur extrémité opposée étant alors effilée, de sorte à ne pas s'étendre ou sur une très courte distance dans le tronçon de tubulure 24, 25. Les noyaux 501 et 502 sont alors maintenus en place dans la filière 500 par de mince bras s'étendant dans un plan de section de la filière 500, reliant les noyaux 501 et 502 à une paroi interne de la filière 500.

D'autres types de filières comme celles 300, 400, 450 qui viennent d'être décrites peuvent être utilisé en fonction de la forme du steak haché à réaliser.

L'ensemble des connections de la conduite d'amenée 3 sur l'entrée 21 de l'élément d'interfaçage 20, du coude sur la première extrémité 241 du tronçon de tubulure 24,25 et de la deuxième extrémité 201 du tronçon de tubulure 24,25 dans l'entrée 121 du moule s'effectue de manière simple et rapide : par exemple par emmanchement et/ou portion de tour type quart ou huitième de tour. Cela permet un démontage et un remontage rapide du système pour former des steaks hachés 10 selon l'invention lors d'un changement de configuration. Il en est de même pour la mise en place de la plaque de broyage 28 ou 48 et de sa lame de broyage 27 ou 47 associé comme décrit précédemment. Ainsi, il est simple et rapide de changer sur un système pour former des steaks hachés 10 selon l'invention la variante de steaks hachés à élaborer.

D'autre part, bien que le positionnement de la plaque de broyage 28, 48 a été décrit au niveau de rebords 242, 251 formant des moyens de retenue de la plaque de broyage et situés aux extrémités du tronçon de tubulure 24,25, il est possible de prévoir d'autres moyens de retenue répartie de manière discrète le long du tronçon de tubulure 24,25 entre la première extrémité 241 et la deuxième extrémité 201 en fonction de la répartition des fibres F de viande hachée au sein du volume de la cavité 140,245 de moulage.

Dans une autre variante de réalisation du système pour former des steaks hachés 10 selon l'invention, la conduite d'amenée 3 est directement connectée à la première extrémité du tronçon de tubulure 24,25.

Selon un autre mode de réalisation, dans le cas où la masse de viande V transitant pas la conduite d'amenée 3 est déjà hachée, la lame de broyage 27,47 n'est pas nécessaire à l'élaboration et peut ne pas être montée, la plaque de broyage 28,48 étant utilisée alors seule. Une pression d'injection fournie par la pompe d'alimentation est alors suffisante pour faire passer la masse de viande à travers la plaque de broyage.

Dans une autre variante de réalisation du système pour former des steaks hachés 10 selon l'invention, ce dernier comporte en outre des moyens de coupe des fibres F injectées dans la cavité 140, 245 du moule 12 afin d'araser le steak haché en cours d'élaboration de sorte à réduire au maximum un modification de l'agencement des fibres F dans le steak haché lorsque la cavité 140,245 est déplacée après une injection. Ces moyens de coupe sont judicieusement situés juste au-dessus de l'entrée de la cavité 140,245, en aval de la plaque de broyage. Par exemple, ces moyens de coupe peuvent être une série de fils de coupe tendus parallèlement à l'axe de rotation du tambour 14 en travers de l'entrée de la cavité 140. Selon un autre exemple, ces moyens de coupe peuvent être une lame ou un couteau agencé de sorte à traverser en arasant une section de l'entrée de la cavité.

Bien entendu, il est possible d'apporter à l'invention de nombreuses modifications sans pour autant sortir du cadre de celle-ci.

## Revendications

1. Système pour former des steaks hachés (10) à partir d'une masse de viande (V) comportant :
- un moule (12;240) comprenant au moins une cavité (140;245) de formation de steak haché ;
- une conduite d'amenée (3) de la masse viande vers le moule,
**caractérisé en ce que** le système comporte en outre un élément d'interfaçage (20) de la conduite d'amenée sur le moule comprenant :
- un tronçon de tubulure (24,25) ayant une première extrémité (241) connectée à une sortie de la conduite d'amenée et une deuxième extrémité (201) opposée connectée à une entrée du moule ;
- une plaque de broyage (28;48) montée au niveau de la première extrémité, laquelle plaque de broyage comporte une série d'orifices traversants une épaisseur répartis sur la surface de la plaque de broyage, la série d'orifices traversant ont leur axe parallèle à l'axe du tronçon de tubulure ;
- une lame de broyage (27;47) associée à la plaque de broyage et montée en amont de cette dernière ;
et dans lequel :
- le tronçon de tubulure a - en aval de la plaque de broyage - une première partie (24) de forme tronconique recevant des fibres de viande hachée à la sortie de la plaque de broyage agencée de sorte à permettre un resserrement de ces fibres de viande hachée pour que les fibres de viande haché soient sensiblement parallèles les unes par rapport aux autres et serrées les unes contre les autres de sorte à former un ensemble cohérent de fibres parallèles,
- le tronçon de tubulure a - en aval de la première partie (24) et adjacent à cette première partie - une deuxième partie (25) avec une section sensiblement constante, notamment sensiblement de forme cylindrique de révolution, se terminant au niveau de la deuxième extrémité,
- le tronçon de tubulure est un conduit ouvert de sorte que l'ensemble cohérent de fibres parallèles s'écoule librement et sans perturbation le long de la deuxième partie du tronçon de tubulure et sorte de la deuxième extrémité dans le moule,
- le tronçon de tubulure a un cône de guidage (29), lequel cône de guidage est monté coaxialement et s' étendant dans la première partie (24) du tronçon de tubulure,
- un coude (23) est monté amovible sur la première extrémité du tronçon de tubulure, l'élément d'interfaçage comportant: des moyens d'entrainement (22,30,31,26) en rotation de la lame de broyage débrayables, les moyens d'entrainement sont montés sur le coude, un arbre d'entrainement (30,26) s'étendant dans le coude de manière coaxiale au tronçon de tubulure, la lame de broyage 47 est montée sur l'extrémité 31 de l'arbre d'entraînement 30.

2. Système selon revendication 1, **caractérisé en ce que** :
- la lame de broyage est montée mobile en appui sur la plaque de broyage, et montée mobile à coulissement sur les moyens d'entrainement, et/ou
- la cavité du moule est mobile par rapport à l'entrée du moule.

3. Système selon l'une des revendications 1 à 2, caractérisé en ce la cavité du moule est mobile par rapport à l'entrée du moule, et en ce qu'il comporte en outre des moyens de pilotage d'une injection de masse de viande dans la cavité du moule agencés de sorte à réaliser l'injection lors d'une très forte décélération de la cavité du moule.

4. Système selon l'une des revendications 1 à 3, **caractérisé en ce que** :
- il comporte en outre des moyens de coupe des fibres (F) injectées dans la cavité (140, 245) agencés de sorte à araser le steak haché en cours d'élaboration lors d'un déplacement de la cavité, et/ou
- au niveau de la deuxième extrémité (201) du tronçon de tubulure (24,25), l'élément d'interfaçage comporte une filière (300,400,450,500) de création d'une série de flux d'injection (310, 410) dans un moule avec une série de multiples cavités 245.

## Patentansprüche

1. System zum Ausbilden von Hacksteaks (10) ausgehend von einer Fleischmasse (V), umfassend:
- eine Form (12; 240) mit wenigstens einem Hohlraum (140; 245) zur Ausbildung eines Hacksteaks;
- eine Zufuhrleitung (3) für die Fleischmasse in Richtung der Form,
**dadurch gekennzeichnet, dass** das System außerdem ein Interface-Element (20) zwischen der Zufuhrleitung und die Form umfasst, welches aufweist:
- einen Rohrabschnitt (24,25) mit einem ersten Ende (241), welches mit einem Ausgang der Zufuhrleitung verbunden ist, und einem entgegengesetzten zweiten Ende (201), welches mit einem Eingang der Form verbunden ist;
- eine Zerkleinerungsplatte (28; 48), welche auf Höhe des ersten Endes angebracht ist, wobei diese Zerkleinerungsplatte aufweist:
eine Reihe von Durchgangsöffnungen, die sich durch eine Dicke erstrecken und über die Oberfläche der Zerkleinerungsplatte verteilt sind, wobei die Reihe von Ausgangsöffnungen ihre Achse parallel zu einer Achse des Rohrabschnitts haben;
- eine Zerkleinerungsklinge (27; 47), welche mit der Zerkleinerungsplatte verknüpft und vorgelagert zu der Letzteren angebracht ist;
und wobei:
- der Rohrabschnitt - nachgelagert zu der Zerkleinerungsplatte - einen ersten Teil (24) mit kegelstumpfartiger Form aufweist, welche Hackfleischfasern an dem Ausgang der Zerkleinerungsplatte aufnimmt, derart eingerichtet, um ein Einzwängen der Hackfleischfasern zu ermöglichen, so dass die Hackfleischfasern im Wesentlichen parallel zueinander und gegeneinander gedrückt werden, so dass eine zusammenhängende Anordnung von parallelen Fasern gebildet wird,
- der Rohrabschnitt - nachgelagert zu dem ersten Teil (24) und benachbart zu diesem ersten Teil - einen zweiten Teil (25) mit einem im Wesentlichen konstanten Querschnitt, insbesondere mit im Wesentlichen rotationzylindrischer Form, aufweist, welcher auf Höhe des zweiten Endes endet,
- der Rohrabschnitt eine offene Leitung ist, so dass die zusammenhängende Anordnung von parallelen Fasern frei und ohne Störung entlang des zweiten Teils des Rohrabschnitt fließt und aus dem zweiten Ende in die Form austritt,
- der Rohrabschnitt einem Führungskonus (29) aufweist, welcher Führungskonus koaxial mit und sich in den ersten Teil (24) des Rohrabschnitts erstreckend angebracht ist,
- ein Kniestück (23) abnehmbar montiert an dem ersten Ende des Rohrabschnitts angebracht ist,
wobei das Interface-Element umfasst:
entkuppelbare Mittel zum Antrieb (22, 30, 31, 26) in Rotation der Zerkleinerungsklinge, wobei die Mittel zum Antrieb an dem Kniestück angebracht sind, eine Antriebsachse (30,26) sich in dem Kniestück auf mit dem Rohrabschnitt koaxiale Weise erstreckt, und die Zerkleinerungsklinge 47 an dem Ende 31 der Antriebsachse 30 angebracht ist.

2. System nach Anspruch 1, **dadurch gekennzeichnet, dass**:
- die Zerkleinerungsklinge beweglich in Anlehnung an der Zerkleinerungsplatte angebracht ist, und gleitend beweglich an den Mitteln zum Antrieb angebracht ist, und/oder
- der Hohlraum der Form beweglich bezüglich des Eingangs der Form ist.

3. System nach einem der Ansprüche 1 oder 2, **dadurch gekennzeichnet, dass** der Hohlraum der Form beweglich bezüglich des Eingangs der Form ist, und das sie außerdem Mittel zur Steuerung einer Injektion der Fleischmasse in den Hohlraum der Form aufweist, welche derart eingerichtet sind, dass die Injektion während einer sehr starken Verzögerung des Hohlraums der Form erfolgt.

4. System nach einem der Ansprüche 1 - 3, **dadurch gekennzeichnet, dass**:
- sie außer dem Mittel zum Schneiden der in den Hohlraum (140, 245) injizierten Fasern (F) aufweist, welche derart eingerichtet sind, dass das Hacksteak im Bearbeitungsverlauf bei einer Bewegung des Hohlraums eingeebnet wird, und/oder
- das Element zu Kopplung auf Höhe des zweiten Endes (201) des Rohrabschnitt (24,25) eine Verzweigung (300, 400, 450, 500) zur Erzeugung einer Reihe Injektionsflüssen (310, 410) in eine Form mit einer Reihe von mehreren Hohlräumen 245 aufweist.

## Claims

1. System for forming minced meat pieces (10) from a mass of meat (V) comprising:
- a mould (12; 240) comprising at least one cavity (140; 245) for forming a minced meat piece;
- a supply channel (3) for supplying the mass of meat to the mould,
**characterized in that** the system further comprises an interface element (20) between the supply channel and the mould comprising:
- a tubular section (24,25) having a first end (241) connected to an outlet of the supply channel and an opposite second end (201) connected to an inlet of the mould;
- a grinding plate (28; 48) mounted at a level of the first end; which grinding plate comprises a series of orifices which extend through a thickness and are distributed over the surface of the grinding plate, the series of orifices having their axes parallel to the axis of the tubular section,
- a grinding blade (27; 47) associated with the grinding plate and mounted upstream of the latter;
and wherein:
- the tubular section has - downstream of the grinding plate - a first part (24) of truncated form receiving minced meat fibres at the outlet of the grinding plate arranged so as to enable a constriction of these minced meat fibres such that the minced meat fibres are substantially parallel to each other and constricted against each other so as to form a coherent set of parallel fibres,
- the tubular section has - downstream of the first part (24) and adjacent to this first part - a second part (25) with a substantially constant cross section, in particular substantially cylindrical in shape, ending at a level of the second end,
- wherein the tubular section is an open channel such that the coherent set of parallel fibres flows freely and without disruption along the second part of the tubular section and exits from the second end into the mould,
- wherein the tubular section has a guide cone (29), which guide cone is assembled coaxially and extends in the first part (24) of the tubular section,
- wherein an elbow part (23) is removably mounted on the first end of the tubular section;
the interface forming element comprising disconnectable drive means (22, 30, 31, 26) for rotating the grinding blade, the drive means being assembled on the elbow part, a drive shaft (30, 26) extending in the elbow part coaxially to the tubular section, the grinding blade (47) being assembled on the end (31) of the drive shaft (30).

2. System according to claim 1, **characterized in that**:
- the grinding blade is assembled mobile and resting against the grinding plate, and slidingly mounted on the drive means, and/ or
- the cavity of the mould is mobile with respect to the inlet of the mould.

3. System according to one of the claims 1-2, **characterized in that** the cavity of the mould is mobile with respect to the inlet of the mould, and **in that** it further includes a meat mass injection controller in the cavity of the mould arranged so as to carry out the injection during a very strong deceleration of the cavity of the mould.

4. System according to any of the claims 1-3, **characterized in that**:
- it further includes means for cutting the fibres (F) injected into the cavity (140, 245) arranged so as to level the minced meat piece being developed during a movement of the cavity, and/ or
- at the level of the second end (201) of the tubular section (24, 25), the interface element includes a nozzle (300, 400, 450, 500) for creating a series of injection flows (310, 410) in a mould with a series of multiple cavities (245).
